Europäisches Patentamt

European Patent Office

Office européen des brevets

(11) Publication number: **0 079 734**
**B1**

(12) **EUROPEAN PATENT SPECIFICATION**

(45) Date of publication of patent specification: **13.02.85**

(21) Application number: **82305909.2**

(22) Date of filing: **05.11.82**

(51) Int. Cl.⁴: **C 05 C 7/00, C 05 G 3/08**

(54) Additive for fertilisers.

(30) Priority: **06.11.81 DE 3144085**

(43) Date of publication of application:
**25.05.83 Bulletin 83/21**

(45) Publication of the grant of the patent:
**13.02.85 Bulletin 85/07**

(84) Designated Contracting States:
**AT BE DE FR GB IT NL SE**

(56) References cited:
**EP-B-0 019 881**
**DE-A-2 702 284**
**DE-A-2 707 639**
**FR-A-2 385 660**

(73) Proprietor: **SKW Trostberg Aktiengesellschaft**
**Dr.-Albert-Frank-Strasse 32 Postfach 1150/1160**
**D-8223 Trostberg (DE)**

(72) Inventor: **Michaud, Horst**
**Sonnenleite 11**
**D-8223 Trostberg (DE)**
Inventor: **Raveling, Hermann**
**Ginzing 5**
**D-8226 Altenmarkt (DE)**
Inventor: **Seeholzer, Josef**
**Eichenstrasse 3**
**D-8223 Trostberg (DE)**

(74) Representative: **Senior, Janet et al**
**Abel & Imray Northumberland House 303-306**
**High Holborn**
**London WC1V 7LH (GB)**

EP 0 079 734 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 079 734**

## Description

The invention relates to an additive for fertilisers, especially fertiliser solutions for the inhibition of nitrification.

In addition to other nitrification-inhibiting substances, it has recently become increasingly common to add dicyandiamide to nitrogen fertilisers for the better exploitation of the nitrogen content. The use of dicyandiamide in liquid fertilisers (fertiliser solutions) is of particular interest. However, because of the physical properties of dicyandiamide, there are a number of difficulties, for example the difficulty of incorporating the dicyandiamide, which is relatively only sparingly soluble, in such solutions. In many cases the solubility of dicyandiamide is in fact too low to obtain the concentration desired for practical purposes. For example, DE—OS 27 02 284 discloses dicyandiamide-containing nutrient solutions and, in particular, NP and NPK fertiliser solutions, but the solubility of dicyandiamide therein is very low. In addition, fluctuations in temperature of the solutions result in coarse-crystalline dicyandiamide precipitates which settle, so that, at least to some extent, the product is incapable of fulfilling its task of inhibiting nitrification. Furthermore, when the solutions containing dicyandiamide are stored for a relatively long period, even with slight temperature differences, large dicyandiamide crystals may separate out and these prevent uniform spraying of the solution. A further disadvantage is the low rate of dissolution of the dicyandiamide which is a result of its moderate solubility.

We have now found that use of an inorganic component, and in particular a water-insoluble inorganic compound having a large specific surface area, is advantageous in ensuring that the dicyandiamide remains dispersed even at low temperatures and there is no appreciable change as a result of separation or crystallisation effects.

Accordingly, the present invention provides a nitrogen fertiliser comprising the fertiliser, an inorganic dispersion-forming agent and dicyandiamide.

The fertiliser is preferably a fertiliser solution and the inorganic dispersion-forming agent and the dicyandiamide may, for example, be added together to the fertiliser and for this purpose may be formulated as a mixture.

Accordingly, the present invention also provides a nitrification-inhibiting additive for fertilisers comprising dicyandiamide and an inorganic dispersion-forming agent.

The inorganic dispersion-forming agent is generally finely ground and may comprise, for example,

(i) a water-insoluble inorganic compound having a large specific surface area or

(ii) a water-insoluble inorganic compound having a large specific surface area and a dispersing or wetting agent.

Generally, the inorganic compound is substantially insoluble in water at normal temperatures (ca. 20°C) and has a specific surface area of at least 10 m²/g as measured by the BET method (see Römpp's Chemie Lexikon, 7 Aufl., Vol. 1, page 355).

Suitable water-insoluble inorganic substances are, for example, various types of silica, such as, for example, aerosil, kieselguhr and diatomaceous earth, furnace dusts resulting from the manufacture of silicon or ferrosilicon, aluminium oxide, zinc oxide, kaolin, bentonite and montmorrillonite. Attapulgite, a needle-like magnesium aluminium hydrosilicate, is preferably used.

The effective surface area of such inorganic compounds, as determined by the BET method, preferably is at least 10 m²/g, preferably up to 300 m²/g, more especially at least 15 m²/g and more especially up to 250 m²/g.

Combining these oxides or silicates with dicyandiamide compensates for the disadvantage of the low solubility of dicyandiamide and low rate of dissolution. The dicyandiamide particles are maintained in suspension until the fertiliser solution is applied. Surprisingly, in addition, the dicyandiamide is reliably prevented from crystallising out when stored for a relatively long period or when cooled. Such dispersions are therefore extremely stable and can be applied using conventional spraying apparatus since there is no danger of recrystallisation.

The dicyandiamide used may be of any quality, provided it is substantially free from phytotoxic impurities. A dicyandiamide having a degree of purity of at least 98.5% is preferably used.

Generally, finely ground dicyandiamide is used. Preferably, the grain size should not exceed 0.5 mm. Thus, for example, substantially all particles may be ≤0.2 mm. Dicyandiamide of average particle size ≤0.3 mm, for example ≤0.2 mm, and commercial dicyandiamide in which 60 to 70% of the particles are ≤0.075 mm may also be used.

The preparation of an additive of the invention may be carried out by mixing an appropriate quantity of the inorganic component with finely ground dicyandiamide. The operation may be carried out, for example, in a concrete mixer, DRAIS mixer or double cone mixer. The content of the inorganic component should preferably not greatly exceed 50% by weight. Dispersion in the fertiliser solution may then be carried out by sprinkling in an appropriate quantity of additive and then pumping round or stirring round. In a different embodiment, the additive is advantageously added to the fertiliser solution as a highly concentrated aqueous suspension. For this purpose, a quantity of the inorganic compound sufficient to form a viscous slurry that is still capable of being poured is first mixed with water and the desired quantity of dicyandiamide added subsequently. In this case too, the proportion of the inorganic component preferably does not greatly exceed 50% by weight of the total additive. The advantage of an aqueous

2

suspension of this type is the simple and rapid dispersion of the additive in the fertiliser solution even without special mixing apparatus. This, for example, may be advantageous for the farmer who wishes to add the agent immediately before applying the fertiliser solution.

A further variant of the process is, for example, to mix the inorganic component homogeneously with the dicyandiamide which is still moist from the manufacturing process and which has a water content of, for example, up to 25% by weight, and then, optionally, to dry them together. Such premixed additives are distinguished by particularly good flowability and ready dispersibility in fertiliser solutions.

Because of their excellent flowability, these additives can also be accurately metered into solid fertilisers.

The additive is preferably made up of from 1 to 50, more especially 2 to 30, parts by weight of the inorganic component together with from 50 to 99, more especially 70 to 98, parts by weight of dicyandiamide.

When using the additive in highly concentrated aqueous form, the solids content of the dispersion is preferably at least 30%, preferably up to 95%, more especially 30 to 70%, by weight.

Certain types of silicic acid (readily ascertained by those skilled in the art) are preferably used with the addition of a dispersing agent whereby they are more readily suspended in the fertiliser solution. Examples of such dispersing agents are, for example, lignin sulphonates or sulphite modified amino-s-triazine formaldehyde condensation products. Preferably such dispersing agents are added in an amount of from 0.1 to 5% by weight, more especially 1 to 3% by weight, calculated on the total additive.

The additive may be added as a nitrification inhibitor to nitrogen fertilisers, especially aqueous nitrogen fertiliser solutions. Suitable fertilisers are, for example, those mentioned in DE—OS 27 02 284.

More especially, the present invention provides a liquid nitrogen fertiliser solution containing a composition comprising from 50 to 99% by weight of dicyandiamide and from 1 to 50% by weight of magnesium aluminium hydrosilicate capable of forming an aqueous suspension.

The following Examples illustrate the invention. In the Examples the Attagel 40 and Attagel 150 used have a surface area of 210 m²/g determined by BET.

Example 1

Dicyandiamide having a grain size of <0.2 mm was mixed in a tumbling barrel with a finely disperse pyrogenic silica (BET surface area 18 m²/g) formed in the manufacture of ferrosilicon in an electric furnace. Three different batches of additive, containing respectively 10, 30 and 50% by weight of silica, were manufactured. The resulting products were incorporated by means of a slow-speed stirring apparatus into an ammonium nitrate/urea fertiliser solution having a 28% nitrogen content and consisting of 39.5% by weight of ammonium nitrate, 30.5% by weight of urea and 30% by weight of water. The quantity of additive introduced was in each case 7% by weight of dicyandiamide calculated on the fertiliser solution. This quantity was above the saturation limit of dicyandiamide in this solution, which, at 20°C is only 5.5%.

The stirring time required for the complete dispersion of the additive after introduction into the fertiliser solution and the degree of deposition after a stirring time of 10 minutes at a stirring speed of 140 rev/min were ascertained. The results are given below.

TABLE 1

| Proportion of silica in additive (% by weight) | 10 | 30 | 50 |
|---|---|---|---|
| Stirring time in minutes until complete dispersion | ca. 0.5 | ca. 1.0 | ca. 1.0 |
| Proportion of the dispersion remaining in suspension (% by volume) after | | | |
| 1 hour | 35 | 78 | 93 |
| 2 hours | 27 | 54 | 77 |
| 4 hours | 22 | 40 | 70 |

The pulverulent additives had a good flowability and could be metered without difficulty. The dispersion was carried out in each case within 1 minute by slight mechanical agitation, such as slow stirring, shaking or pumping round. As long as the movement continued, the homogeneous suspension did not settle. Similar results were obtained using bentonite and montmorillonite.

3

In contrast, the incorporation of dicyandiamide alone into fertiliser solutions of the same composition presented considerable difficulties: in powder form it did not flow freely and agglomerated in the fertiliser solution to form relatively large lumps which stuck to the wall and base.

Example 2

Dicyandiamide having a grain size of <0.2 mm was mixed by roller-burnishing (in a mill containing rods and balls) with a needle-like type of attapulgite (Attagel 40, Engelhard) having an average particle size of 0.00014 mm. Three batches of additive, containing respectively 10, 30 and 50% by weight of attapulgite, were manufactured. The pulverulent free-flowing additive was stirred under the same conditions as in Example 1 into the same ammonium nitrate/urea fertiliser solution. The stirring time in which the additive was completely dispersed and also the relationship of its suspendability to the standing time were ascertained and the results given below.

TABLE 2

| Proportion of attapulgite in the additive in % by weight | 10 | 30 | 50 |
|---|---|---|---|
| Stirring time in minutes until complete dispersion (140 rev/min) | ca. 0.5 | ca. 5.0 | ca. 7.0 |
| Proportion of the dispersion remaining in suspension in % by volume after 1 hour / 2 hours / 4 hours | 49 / 33 / 28 | 100 / 100 / 99 | 100 / 100 / 100 |

The powders, which gave a very good flowability, could be metered rapidly and without difficulty and could be dispersed rapidly. The suspension could be maintained by slight mechanical agitation.

Example 3

Commercial dicyandiamide having a grain size distribution of from 60 to 70% <0.075 mm and approximately 1% <0.5 mm was mixed by roller burnishing with a needle-like attapulgite (Attagel 150) having an average particle size of 0.00012 mm and 8% >0.044 mm and introduced into the fertiliser solution described in Example 1. Dispersion was then carried out by means of a heavy-duty mixer (Turrax) at 2000 rev/min. Two solutions were prepared as follows:

(i) by adding 4.7% by weight, calculated on the fertiliser solution, of additive consisting of 90% by weight of dicyandiamide and 10% by weight of attapulgite.

(ii) by adding 6.2% by weight, calculated on the fertiliser solution, of additive consisting of 67% by weight of dicyandiamide and 33% by weight of attapulgite.

The relationship of suspendability to standing time of the solutions was as follows:

TABLE 3

| | Proportion of the dispersion remaining in suspension in % by volume after: | | |
|---|---|---|---|
| | 1 day | 7 days | 14 days |
| Addition according to (i) | 100 | 40 | 30 |
| Addition according to (ii) | 100 | 100 | 100 |

4

Even after 10 weeks' storage at 5°C, the fertiliser solution according to addition (ii) did not precipitate any dicyandiamide crystals larger than 0.2 mm.

Example 4

Mixtures of dicyandiamide (grain size <0.2 mm) and attapulgite (Attagel 150) manufactured by roller-burnishing were mixed with water. These liquid mixtures were added to the ammonium nitrate/urea fertiliser solution described in Example 1. After a stirring time of 10 minutes with a slow-speed stirrer (140 rev/min), the suspendability was assessed. The quantity of dicyandiamide added was in each case 7%, calculated on the fertiliser solution.

The additives had the following compositions:

|  | Dicyandiamide % by weight | Attapulgite % by weight | Water content of the mixtures — % by weight |
|---|---|---|---|
| (a) | 93 | 7 | 35 |
| (b) | 90 | 10 | 40 |
| (c) | 87 | 13 | 40 |
| (d) | 67 | 33 | 55 |

These mixtures were stirred into the fertiliser solution by hand using a rod and, after their dispersion, were stirred for a further 3 minutes. The suspendability at 1 day, 7 days and 14 days was measured and the results are given below.

| Additive | Proportion of the dispersion remaining in suspension (% by volume) | | |
|---|---|---|---|
|  | after 1 day | after 7 days | after 14 days |
| (a) | 50 | n/m | n/m |
| (b) | 100 | 70 | n/m |
| (c) | 100 | 100 | 90 |
| (d) | 100 | 100 | 100 |

n/m = not measured

The experiments show that, by the preliminary step of making a paste of the additive and water, a very good suspendability of the dispersion was possible even with very little stirring. The amount of dicyandiamide added was greater than its solubility at 20°C; nevertheless, no precipitation of dicyandiamide crystals was observed. In addition, the crystal growth of the dicyandiamide was so greatly retarded that, even after many weeks' storage, no crystals over 0.2 mm were formed (Without the addition of attapulgite, a fertiliser solution of this type shows dicyandiamide crystals of over 1 mm and crystal intergrowth after only a few days.)

When the fertiliser solution containing additive (d) was cooled to 0°C, no appreciable crystal growth was observed even after several weeks, so that dispersions of this type can be applied without restriction using commercial spraying apparatus.

## Example 5

The additive consisting of

| | |
|---|---|
| dicyandiamide | 66% (grain size <0.2 mm) |
| attapulgite (Attagel 150) | 32% |
| calcium lignin sulphonate | 2% |

was mixed with water (dispersion with 40% water) and stirred by hand into the same nitrogen fertiliser solution as in Example 1. The amount of additive dispersion added to the fertiliser solution was such that that solution contained 7% dicyandiamide. The additive dispersed very rapidly and homogeneously in the fertiliser solution even though added by hand. After 3 minutes' continuous stirring round by hand the solution was left; no deposits were observed after 7 days. The solution was subjected to a 3-week varying temperature test in which it was stored in succession for 1 day at 20°C, 1 day at 10°C, 1 day at 20°C, 1 day at 5°C etc.. No dicyandiamide deposits larger than 0.2 mm were observed.

## Example 6

Moist dicyandiamide (water content approximately 10%; average grain size 300 µ) was mixed with attapulgite (Attagel 40) in a paddle mixer at approximately 50°C for 10 minutes. The additive manufactured in this manner and containing 5% by weight attapulgite was stirred in an amount of 4.9% by weight into the 70% ammonium nitrate/urea fertiliser solution (28% N) of Example 1 using a slowly rotating stirring apparatus (140 rev/min). The mixture was completely dispersed after only approximately 1 minute after its introduction.

An additive manufactured in the same manner and containing 10% by weight of attapulgite was homogeneously dispersed within only approximately 30 seconds after the addition of 5.2% by weight of additive.

## Example 7

The additive was manufactured by first mixing the attapulgite (Attagel 150) in water and then dispersing the dicyandiamide (1% >0.5 mm, remainder <0.076 mm) in this suspension. When the additive was added to the fertiliser solution of Example 1 by hand, particularly rapid mixing took place and the suspendability was also especially good. If, for example, 13.8% by weight of a liquid dispersion of this type which had a 55% water content and in which the weight ratio of dicyandiamide to attapulgite was 67:33, was added to the ammonium nitrate/urea fertiliser solution, after shaking round vigorously once no crystal precipitates were observed even after 14 days.

## Example 8

1.65% by weight of an additive consisting of 90% by weight of dicyandiamide (grain size <0.2 mm) and 10% by weight of attapulgite (Attagel 40) were stirred into a nitrogen/phosphorus fertiliser solution, which contained 10% nitrogen and 34% $P_2O_5$ and which had a density of 1.4 g/cm$^3$, and were then dispersed with a heavy-duty stirring apparatus at 2000 rev/min. The dispersion was so stable that, even after 3 weeks' storage at 0°C, there were still no deposits whatever.

## Claims

1. An agent suitable for addition to fertilisers comprising dicyandiamide and a water-insoluble inorganic compound having a specific surface area of at least 10 m$^2$/g, and, if desired, a dispersing agent.

2. An agent as claimed in claim 1, wherein the specific surface area of the water-insoluble inorganic compound is at least 15 m$^2$/g.

3. An agent as claimed in claim 1 or claim 2, comprising 50 to 99% by weight of dicyandiamide and 1 to 50% by weight of water-insoluble inorganic compound, calculated on the sum of the dicyandiamide and water-insoluble inorganic compound.

4. An agent as claimed in claim 3, comprising 70 to 98% by weight of dicyandiamide and 2 to 30% by weight of water-insoluble inorganic compound, calculated on the sum of the dicyandiamide and water-insoluble inorganic compound.

5. An agent as claimed in any one of claims 1 to 4, in the form of an aqueous solution having a solids content of at least 30% by weight.

6. An agent as claimed in any one of claims 1 to 5, wherein the inorganic compound is a silicate or oxide.

7. An agent as claimed in claim 6, wherein the water insoluble inorganic compound is a magnesium aluminium hydrosilicate.

8. A process for the preparation of an agent as claimed in any one of claims 1 to 7, which comprises
(a) mixing the inorganic compound with dicyandiamide, or
(b) mixing the inorganic compound with water to form a viscous slurry that is capable of being poured and then adding dicyandiamide, or

(c) mixing the inorganic compound with dicyandiamide having a moisture content of up to 25% by weight, and, if desired, drying the mixture.

9. A nitrogen fertiliser composition comprising a fertiliser and an agent as claimed in any one of claims 1 to 7.

10. A fertiliser composition as claimed in claim 9, which is in the form of an aqueous solution.

**Patentansprüche**

1. Als Zusatz für Düngemittel geeignetes Mittel, umfassend Dicyandiamid und eine wasserunlösliche anorganische Verbindung mit einer spezifischen Oberfläche von mindestens 10 $m^2$/g und gegebenenfalls ein Dispergiermittel.

2. Mittel nach Anspruch 1, bei dem die spezifische Oberfläche der wasserunlöslichen anorganischen Verbindung mindestens 15 $m^2$/g beträgt.

3. Mittel nach Anspruch 1 oder 2, umfassend 50 bis 99 Gew.-% an Dicyandiamid und 1 bis 50 Gew.-% an wasserunlöslicher anorganischer Verbindung, bezogen auf die Gesamtmenge des Dicyandiamids und der wasserunlöslichen anorganischen Verbindung.

4. Mittel nach Anspruch 3, umfassend 70 bis 98 Gew.-% an Dicyandiamid und 2 bis 30 Gew.-% an wasserunlöslicher anorganischer Verbindung, bezogen auf die Gesamtmenge des Dicyandiamids und der wasserunlöslichen anorganischen Verbindung.

5. Mittel nach einem der Ansprüche 1 bis 4 in Form einer wässrigen Lösung mit einem Feststoffgehalt von mindestens 30 Gew.-%.

6. Mittel nach einem der Ansprüche 1 bis 5, bei dem die anorganische Verbindung ein Silikat oder Oxid ist.

7. Mittel nach Anspruch 6, bei dem die wasserunlösliche anorganische Verbindung ein Magnesium-Aluminium-Hydrosilikat ist.

8. Verfahren zur Herstellung eines Mittels gemäß einem der Ansprüche 1 bis 7, bei dem
(a) die anorganische Verbindung mit dem Dicyandiamid vermischt wird oder
(b) die anorganische Verbindung mit Wasser zu einer viskosen, jedoch noch gießfähigen Aufschlämmung vermischt wird und dann mit Dicyandiamid versetzt wird, oder
(c) die anorganische Verbindung mit Dicyandiamid mit einem Feuchtigkeitsgehalt von bis zu 25 Gew.-% vermischt wird und gegebenenfalls das Gemisch getrocknet wird.

9. Stickstoff-Düngemittelzusammensetzung, umfassend ein Düngemittel und ein Mittel gemäß einem der Ansprüche 1 bis 7.

10. Düngemittelzusammensetzung gemäß Anspruch 9 in Form einer wässrigen Lösung.

**Revendications**

1. Agent convenant pour être ajouté à des engrais qui comprend du dicyanodiamide et un composé minéral insoluble dans l'eau ayant une surface spécifique de contact d'au moins 10 $m^2$/g et, si on le désire, un agent dispersant.

2. Agent selon la revendication 1, dans lequel la surface spécifique de contact du composé minéral insoluble dans l'eau est d'au moins 15 $m^2$/g.

3. Agent selon la revendication 1 ou la revendication 2, comprenant 50 à 99% en poids de dicyanodiamide et 1 à 50% en poids de composé minéral insoluble dans l'eau, calculé sur la base de la somme du dicyanodiamide et du composé minéral insoluble dans l'eau.

4. Agent selon la revendication 3, comprenant 70 à 98% en poids de dicyanodiamide et 2 à 30% en poids de composé minéral insoluble dans l'eau, calculé sur la base de la somme du dicyanodiamide et du composé minéral insoluble dans l'eau.

5. Agent selon l'une quelconque des revendications 1 à 4, sous la forme d'une solution aqueuse ayant une teneur en matières solides d'au moins 30% en poids.

6. Agent selon l'une quelconque des revendications 1 à 5, dans lequel le composé minéral est un silicate ou un oxyde.

7. Agent selon la revendication 6, dans lequel le composé minéral insoluble dans l'eau est un hydrosilicate de magnésium et d'aluminium.

8. Procédé de préparation d'un agent selon l'une quelconque des revendications 1 à 7, qui comprend
(a) le mélange du composé minéral avec le dicyanodiamide, ou
(b) le mélange du composé minéral avec de l'eau pour former une bouillie visqueuse qui peut être versée, puis l'addition de dicyanodiamide, ou
(c) le mélange du composé minéral avec le dicyanodiamide ayant une teneur en humidité pouvant atteindre 25% en poids, et, si on le désire, le séchage du mélange.

9. Composition d'engrais azoté, comprenant un engrais et un agent selon l'une quelconque des revendications 1 à 7.

10. Composition d'engrais selon la revendication 9, qui est sous la forme d'une solution aqueuse.